# EUROPEAN PATENT APPLICATION

(11) **EP 2 073 158 A2**
(43) Date of publication of application: **24.06.2009**
(21) Application number: 08254072.5
(22) Date of filing: 19.12.2008
(51) Int. Cl.: G06Q 10/00, B09B 3/00

(54) **Recycling system**

(30) Priority: 19.12.2007 JP 2007326971; 20.11.2008 JP 2008297147
(71) Applicant: Kabushiki Kaisha Mihama, Chino-shi, Nagano 391-0013 (JP)
(72) Inventor: Hama, Mamoru, Chino-shi Nagano 391-0013 (JP)
(74) Representative: Stuart, Ian Alexander

(57) **Abstract**

The recycling system is capable of motivating consumers to seriously separate wastes. It comprises: identifying/measuring means (22) for identifying kinds of wastes and measuring amounts of the wastes; and point providing means (89) for providing points, which can be used for purchase instead of money, on the basis of the kinds and the amounts of the wastes, which have been identified and measured by the identifying/measuring means (22).

## Description

### BACKGROUND OF THE INVENTION

The present invention relates to a recycling system capable of efficiently separating wastes.

Generally, wastes are disposed by local governments. Wastes are separately collected, recyclable wastes are recycled, and unrecyclable wastes are burned or landfilled by local governments. Local governments respectively employ different disposal systems.

Actually, it is difficult to perfectly separately collect wastes by local governments. The reasons will be explained. Firstly, even if consumers perfectly separate wastes, they receive no benefits from local governments. Secondly, local governments need huge costs in spite of financial deterioration.

Further, local governments employ different separation standards and disposal methods. Some local governments force consumers to complexly separate wastes. In this case, many consumers will incorrectly separate wastes, or some consumers will not separate wastes.

To efficiently separately collect wastes, a system for announcing a method of collecting and disposing wastes under standards determined by a local government was proposed (see Japanese Patent Gazette No. P2002-157378A).

By employing this system, consumers can easily understand a waste disposal method and a separation method under the standards determined by the local government. In this system, consumers must perform a time-consuming method, but they receive no benefits. The consumers who have seriously separated wastes are not distinguished from other consumers who have not separate wastes. Therefore, the system cannot motivate consumers to separate wastes. Namely, it is necessary to motivate consumers to seriously separate wastes.

Thus, another system for effectively separately collecting wastes was proposed (see Japanese Patent Gazette No. P2007-316903A). In the system, a plastic waste collection box is installed in a store. When a plastic waste is put in the collection box, a point corresponding to the plastic waste is written in an IC card by an IC card writer of a consumer.

In this system, the IC card, in which the point has been written, is read by a cash register of a store. Providing a shopping bag to a customer or not is judged on the basis of the point written in the IC card.

In the above described conventional system, points are given to consumers who separated wastes as a benefit, and a shopping bag is provided, at a store, on the basis of the collected points. By this system, the consumers are motivated to separate wastes and put them into the collection boxes installed at the store.

However, household wastes are put in disposal bags and brought to a pick up site on the prescribed dates. Even if wastes are seriously separately collected in stores, most household wastes are conventionally collected.

Wastes should be separated by not only consumers but also companies providing products or services to consumers. It is necessary for the companies to cooperate for separately collecting wastes, recycling wastes and environment protection.

Further, local governments, which collect and dispose wastes, should reinforce efforts to make consumers and companies seriously separate wastes. Preferably, this movement is performed inexpensively.

As described above, a system in which consumers, companies and a local government form a single unit to separately collect wastes is expected.

### SUMMARY OF THE INVENTION

The present invention was conceived to solve or ameliorate one or more of the above described problems.

Preferred embodiments may provide one or more of the following:
a recycling system, which is capable of motivating consumers to seriously separate wastes,
a recycling system, which is capable of motivating companies to seriously separate wastes and in which a local government is capable of efficiently separately collecting wastes inexpensively;
a waste box, which is capable of motivating consumers to seriously separate wastes.

According to the present invention, a recycling system comprises:
identifying/measuring means for identifying kinds of wastes and measuring amounts of the wastes; and
point providing means for providing a point, which can be used for purchase instead of money, on the basis of the kinds and the amounts of the wastes, which have been identified and measured by the identifying/measuring means.

With this system, consumers can use the point for purchase, so that the consumers can be strongly motivated to separate wastes.

In the recycling system, the identifying/measuring means may comprise:
a fluorescent spectrum analyzing section identifying elemental components of the wastes on the basis of fluorescent spectrum and classifying the wastes into a plurality of kinds, such as metal, plastic, glass and others; and
a weight measuring section measuring a weight of each kind of the wastes classified by the fluorescent spectrum analyzing section.

With this structure, the point can be automatically correctly provided.

In the recycling system, the point providing means may comprise:
price storing means for previously storing recycling market prices of the wastes per unit weight;
price calculating means for calculating purchasing prices of the wastes on the basis of the recycling market prices of the wastes per unit weight, which have been stored in the price storing means, and the weights of the wastes, which have been measured by the identifying/measuring means; and
point calculating means for calculating the point of the wastes corresponding to the purchasing prices thereof, which have been calculated by the price calculating means.

With this structure, the point which corresponds to the recycling market prices of the wastes can be suitably set.

The recycling system may further comprise a card reader/writer for writing the point provided by the point providing means in a reward card.

A second basic structure of the recycling system of the present invention comprises:
identifying/measuring means for identifying kinds of wastes and measuring amounts of the wastes, the identifying/measuring means being located in a central disposal center where the wastes are disposed;
point providing means for providing a point, which can be used for purchase, instead of money, at companies supporting the central disposal center, on the basis of the kinds and the amounts of the wastes, which have been identified and measured by the identifying/measuring means;
point storing means for storing the point obtained by selling products, the point storing means being installed at the supporting companies; and
tax reduction calculating means for calculating tax reduction of the supporting companies on the basis of the point stored in the point storing means, the tax reduction calculating means being installed at a local government office and capable of accessing to the point storing means of the supporting companies via communication lines.

With this system, consumers can use the points for purchase, so that the consumers can be strongly motivated to separate wastes.

On the other hand, the supporting companies can ensure the consumers having the points given by separating wastes. Further, by using the points at the supporting companies, tax can be reduced, so that the supporting companies can be motivated to cooperate for the separated collection.

For the local government, if the recycle system is once established, the separated collection is smoothly performed and continued by consumers and the supporting companies. Therefore, wastes can be securely separately collected with low costs.

The waste box of the present invention comprises:
identifying/measuring means for identifying kinds of wastes and measuring amounts of the wastes; and
point providing means for providing a point, which can be used for purchase, instead of money, at companies supporting the central disposal center, to a person separating the wastes on the basis of the kinds and the amounts of the wastes, which have been identified and measured by the identifying/measuring means.

With this structure, consumers can use the points for purchase, so that the consumers can be motivated to separate wastes.

By the first basic structure of the recycling system of the present invention, the consumers can be strongly motivated to separate wastes.

By the second basic structure of the recycling system of the present invention, the consumers and the supporting companies can be motivated to separate wastes. The local government can efficiently separately collect wastes with low costs.

By the waste box of the present invention, the consumers can be strongly motivated to separate wastes.

### BRIEF DESCRIPTION OF THE DRAWINGS

Embodiments of the present invention will now be described by way of examples and with reference to the accompanying drawings, in which:
Fig. 1 is an explanation view of a central disposal center;
Fig. 2 is an explanation view of supporting companies and a local government;
Fig. 3 is a block diagram of the central disposal center;
Fig. 4 is a block diagram of an inner system of the central disposal center, wherein card reader/writers are provided outside of the central disposal center;
Fig. 5 is a block diagram of inner systems of the supporting companies and the local government;
Fig. 6 is a block diagram of a computer system of the supporting company;
Fig. 7 is a block diagram of a computer system of the local government;
Fig. 8 is a block diagram of a waste box, which provides points to consumers who separate wastes;
Fig. 9 is a block diagram of another waste box; and
Fig. 10 is a block diagram of a recycle system using no reward cards.

### DETAILED DESCRIPTION OF THE EMBODIMENTS

Preferred embodiments of the present invention will now be described in detail with reference to the accompanying drawings.

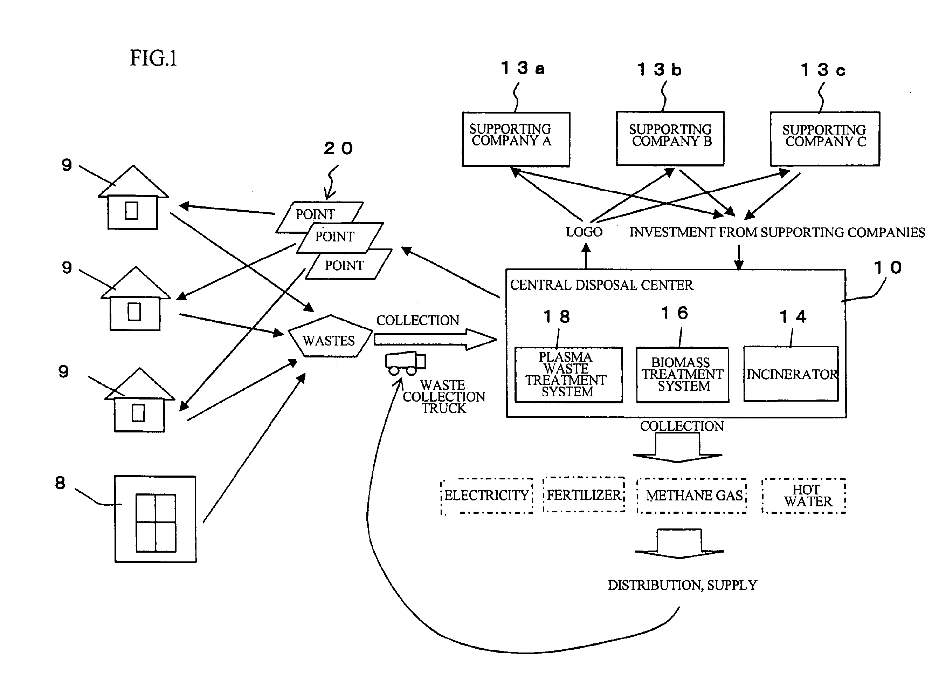

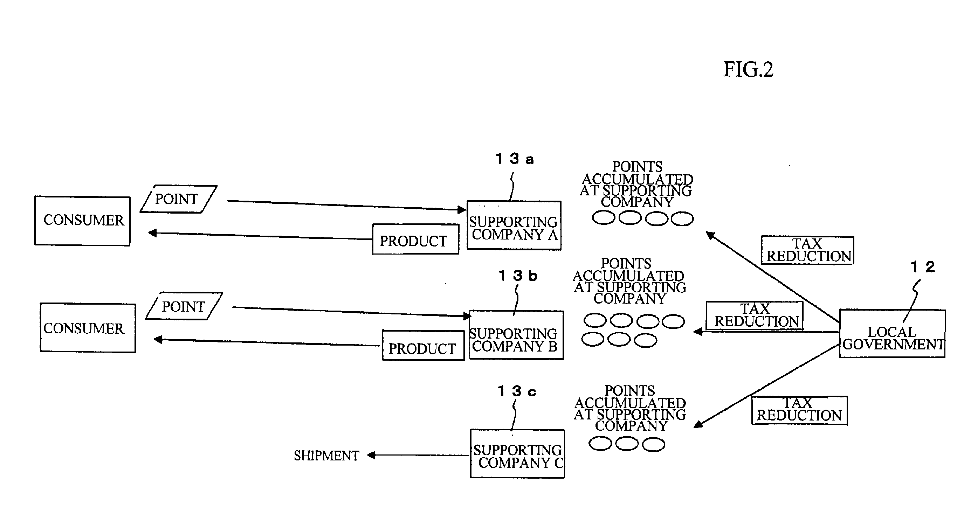

Firstly, the entire structure of the recycle system will be explained with reference to Figs. 1 and 2. Fig. 1 shows a central disposal center, and Fig. 2 shows supporting companies and a local government.

Roles and functions of the central disposal center will be explained with reference to Fig. 1.

The central disposal center 10 disposes wastes. The central disposal center 10 is established by a local government and supported by tax revenue or investments from supporting companies 13a, 13b and 13c.

The central disposal center 10 has an ordinary incinerator 14, a biomass treatment system 16, a plasma waste treatment system 18, etc.. Further, the central disposal center 10 may have landfill spaces.

The ordinary incinerator 14 bums burnable wastes from houses 9 and an office 8. A burning temperature of the incinerator 14 is 800 degrees Celsius or more so as to prevent generation of harmful substances, e.g., dioxin.

Heat generated by the incinerator 14 may be used for various ways. For example, water of a heated swimming pool, which is located near the central disposal center 10, may be heated by the generated heat, water heated by the generated heat may be delivered to houses near the central disposal center 10, etc..

The biomass treatment system 16 recycles wastes of biologic origin by bacteria, etc..

The wastes of biologic origin include raw garbage from the houses 9, leftover foods from food manufacturers, cattle manure, sewage sludge, lumber from thinning, paper, etc..

The wastes of biologic origin can be recycled and reused in various forms. For example, manure composts and a methane gas can be obtained by fermenting raw garbage from the houses 9, cattle manure, etc.. The methane gas can be used, in houses, as a fuel for a kitchen burner, boiler, etc., as well as a propane gas and a city gas. Further, ethanol, which can be used as a vehicle fuel, can be obtained from plant-derived wastes. Recycled waste vegetable oil also can be reused as a vehicle fuel.

The plasma treatment system 18 treats harmful wastes which cannot be burned by the ordinary incinerator 14. The harmful wastes include, for example, used injection syringes from hospitals, polychlorinated biphenyl (PCB), used in tires, from which toxic gasses will be generated by incineration.

The plasma treatment is performed at 10,000 degrees Celsius or higher so as to degrade wastes under an oxygen-free condition. Therefore, the harmful wastes can be securely disposed without being harmful to the environment.

As described above, energies such as heated water, methane gas, electricity, ethanol, etc. can be obtained in the central disposal center 10, so the energies may be sold. Further, the energies may be used as fuels of waste collection trucks.

Note that, hydrogen-fueled trucks or ethanol-fueled trucks, which are environmentally-friendly vehicles, may be suitably used as the waste collection trucks. Further, if the waste collection trucks are given from the supporting companies, the supporting companies will be advertised as environmentally-friendly companies.

The central disposal center 10 gives points to consumers who separated wastes. The points are written in reward cards 20.

The points to be provided to the consumers are determined on the basis of kinds and amounts of the separated wastes. For example, in case that plastic wastes and burnable wastes are separated, a weight ratio of the plastic wastes to the burnable wastes is calculated, and then the point is given on the basis of the calculated ratio. If the point is given on the basis of mere weights, a high point can be obtained by producing heavy wastes. In this example, this disadvantage can be solved by employing the weight ratio.

Carbon offset can be performed in the central disposal center 10. Namely, the biomass treatment system 16 produces composts derived from plants, and the composts can be used for forestation, etc..

The plasma treatment system 18 of the central disposal center 10 is capable of degrading wastes, at the element level, at the high temperature. By using the plasma treatment system 18, carbon dioxide (CO₂) is broken into carbon (C) and oxygen (O₂), so that emission of CO₂ can be reduced.

Note that, the central disposal center 10 may have an apparatus for pyrolyzing CO₂, By pyrolyzing CO₂ which is generated while burning wastes, the CO₂ can be broken into CO and oxygen O. CO is used as energy on burning, so the generated CO can be reused for burning wastes. Therefore, the emission of CO₂ can be reduced.

Next, roles and functions of the supporting companies and the local government will be explained with reference to Fig. 2.

The supporting companies 13a, 13b and 13c accept the purpose and the idea of the recycle system of the present invention, and they put money into the central disposal center 10 as investments. Preferably, the supporting companies 13a, 13b and 13c have the right of using a logo of the recycle system. By putting the logo to practical use, the supporting companies 13a, 13b and 13c can be regarded as the environmentally-friendly companies (see Fig. 1).

The supporting companies 13a, 13b and 13c provide reward cards 20, which can be used for purchasing goods or services instead of money, to consumers.

For example, in case that the supporting company 13a administrates a supermarket, consumers can use the reward cards 20 for buying goods there. Card readers are installed at cash registers of the supermarket, and the consumers can pay by the point written in the reward cards 20 instead of money.

The points used by consumers for purchase are accumulated and stored at the supporting company 13a.

In case that the supporting company 13b is a laundry shop, consumers can pay for the laundry charge by the point. A card reader is installed at a cash register of the shop, and the consumers can pay by the point written in the reward cards 20 instead of money.

The points used by consumers for purchase are accumulated and stored at the supporting company 13b.

In case that the supporting company 13c is a manufacturer, points are not provided to consumers. In this case, the points are accumulated at the supporting company 13c as part of the business activity.

Namely, the supporting company 13c receives no points from the point cards of consumers. Points may be accumulated and stored at the supporting company 13c, without reference to point cards, on the basis of shipment of products.

The local government 12 is capable of checking accumulated points of the supporting companies. The local government 12 may provide benefits to the supporting companies, by reducing taxes, on the basis of the accumulated points. For example, cooperation taxes of the supporting companies may be reduced in proportion to the accumulated points of the companies.

Besides the tax reduction, the local government 12 may grant awards to the supporting companies, as environmentally-friendly companies, on the basis of the accumulated points. By receiving the awards, the supporting companies can effectively advertise themselves as good companies.

The above described scheme using the point system is based on environmental loads, so the point given to consumers separating recyclable wastes can be used like unified currency of a new international framework even if wastes are disposed somewhere in the world.

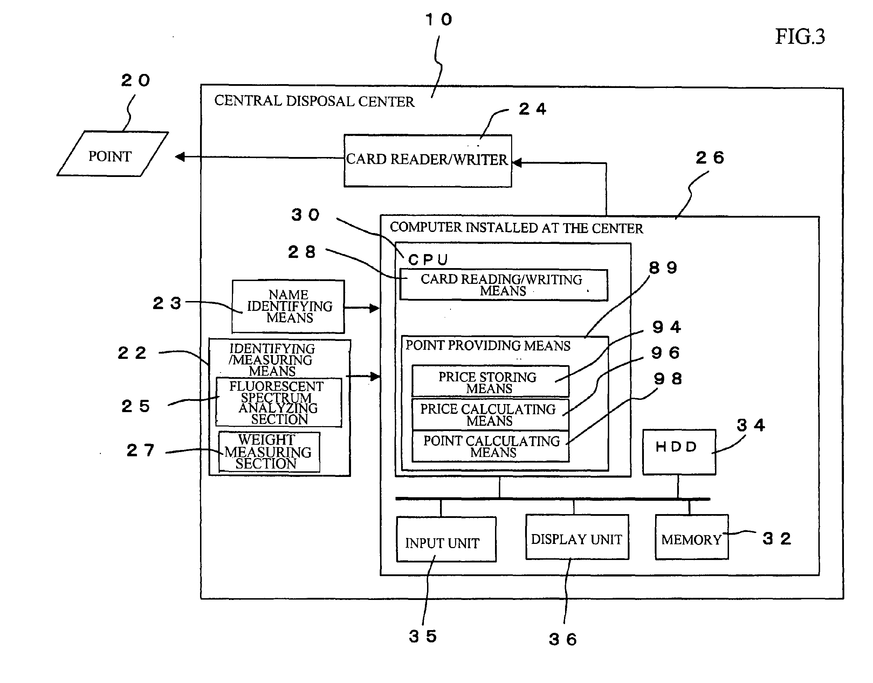

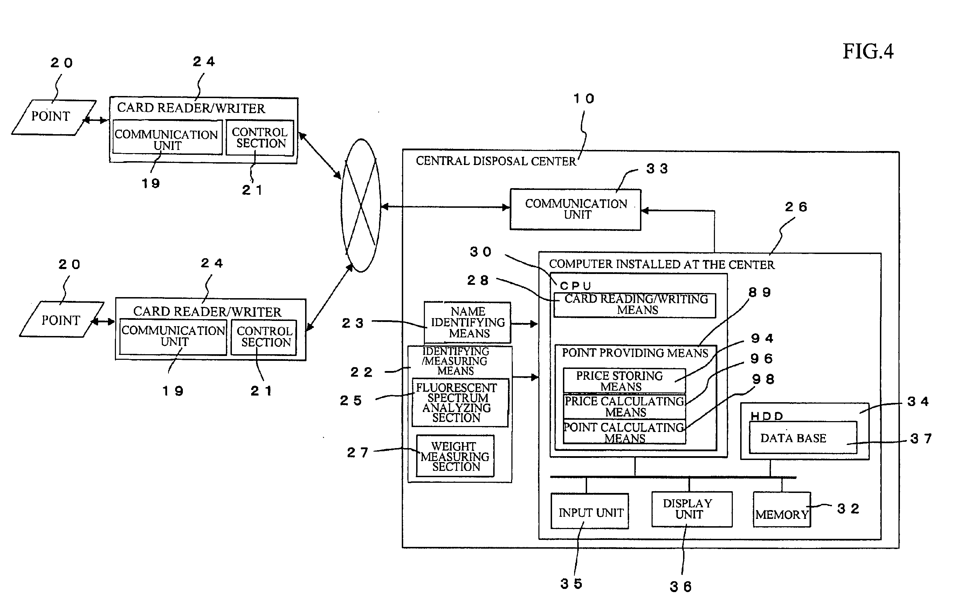

Next, a concrete structure of the recycle system of the present embodiment will be explained with reference to Figs. 3 and 4.

Fig. 3 is a block diagram of the central disposal center 10.

The central disposal center 10 includes: identifying/measuring means 22 for identifying kinds of wastes and measuring amounts of the wastes; name identifying means 23 for identifying names of persons producing wastes from disposal bags; a computer 26 placed in the center 10; point providing means 89 for providing points to the persons on the basis of the kinds and the amounts of the wastes, the point providing means 89 being included in the computer 26; and a card reader/writer 24 for issuing reward cards 20. The identifying/measuring means 22, the name identifying means 23 and the card reader/writer 24 are connected to the computer 26 so as to communicate each other.

For example, the identifying/measuring means 22 comprises: a fluorescent spectrum analyzing section 25 identifying elemental components of the wastes on the basis of fluorescent spectrum and classifying the wastes into a plurality of kinds, such as metal, plastic, glass and others; and a weight measuring section measuring 27 a weight of each kind of the wastes, which has been respectively classified by the fluorescent spectrum analyzing section 25.

The name identifying means 23 has an optical character reader so as to read names of companies, associations, etc., which are written on surfaces of disposal bags.

The identifying/measuring means 22 sends data of the measured weights of the wastes to the computer 26. The name identifying means 23 sends data of the read names to the computer 26.

Card reading/writing means 28 is included in the computer 26. The card reading/writing means 28 controls the card reader/writer 24 so as to write a point based on the measured weights of the wastes in the reward card 20 of the corresponding name. In this process, if the reward card of the corresponding name is inserted in the card reader/writer 24, the card reader/writer 24 writes the point in the reward card. On the other hand, if the reward card of the corresponding name is not inserted therein, the card reader/writer 24 makes a new reward card of the name.

The computer 26 of the center 10 further includes: a CPU 30 for integrally controlling the entire computer 26; a memory 32 for storing data and programs; a hard disk drive unit (HDD) 34 for storing data and programs; an input unit 35, e.g., keyboard, mouse; and a display unit 36.

The card reading/writing means 28 is controlled by the CPU 30 on the basis of programs for controlling the card reader/writer 24, which have been stored in the HDD 34, etc.. Namely, the card reading/writing means 28 is realized by the CPU 30.

If the point is based on mere weights, a high point can be obtained by merely producing heavy wastes. It is unreasonable.

To solve this unreason, the point providing means 89 of the computer 26 may calculate weight ratio of kinds of wastes produced by one consumer or company, and then the point may be given on the basis of the calculated weight ratio.

For example, in case that a consumer A simultaneously produces 4 kg of burnable wastes and 1 kg of plastic wastes, a weight ratio of the plastic wastes to the burnable wastes is 25 %.

On the other hand, in case that another consumer B simultaneously produces 5 kg of burnable wastes and 0.5 kg of plastic wastes, a weight ratio of the plastic wastes to the burnable wastes is 10 %.

Generally, a weight of plastic wastes is not much different from that of burnable wastes. Namely, in the former example, the consumer A well separates the plastic wastes from the burnable wastes, so the point corresponding to 25 % is given to the consumer A. Thus, the card reading/writing means 28 controls the card reader/writer 24 to write the point in the reward card 20 of the consumer A.

Calculating the point, by the point providing means 89, on the basis of the weight ratio is not limited to the weight ratio of plastic wastes to burnable wastes. For example, a weight ratio of cans to burnable wastes or a weight ratio of bottles to burnable wastes may be further employed.

The point providing means 89 is realized by the CPU 30 reading and executing the control programs stored in the HDD 34, etc..

The point providing means 89 comprises: price storing means 94 for previously storing recycling market prices of wastes, e.g., plastics, metals, glasses, per unit weight; price calculating means 96 for calculating a purchasing price of each kind of the wastes on the basis of the recycling market price of each kind of the wastes per unit weight, which has been stored in the price storing means 94, and the weight of each kind of the wastes, which has been measured by the identifying/measuring means 22; and point calculating means 98 for calculating the point of each kind of the wastes corresponding to the purchasing price thereof, which has been calculated by the price calculating means 96.

A relationship between the price and the point has been previously defined. The point calculating means 98 calculates the point for each kind of the wastes on the basis of the previously defined relationship.

The prices stored in the price storing means 94 can be changed according to variation of the market prices.

Note that, the reward card 20 may be an IC card or a magnetic card. The IC card 20 includes an IC chip constituted by, for example, a mere semiconductor memory or a combination of a CPU and a semiconductor memory. The magnetic card includes, for example, a magnetic stripe which acts as magnetic recording means for recording data, e.g., accumulated point, name of a consumer.

When the reward card 20 is inserted into the card reader/writer 24, the recorded data can be read and rewritten.

In case that the card reader/writer 24 is installed at the central disposal center 10, consumers may consign their reward cards 20 to the central disposal center 10, or names of consumers and their points may be stored in the HDD 34 and the stored points may be rewritten in the reward cards 20 when they bring the reward cards 20 to the central disposal center 10.

Note that, as shown in Fig. 4, the card reader/writers 24 may be installed outside of the central disposal center 10. The structural elements shown in Fig. 3 are assigned the same reference symbols and explanation will be omitted.

In Fig. 4, the card reader/writers 24 may be installed at supporting companies13a, 13b and 13c, the local government office 12, etc.. In this case, the card reader/writers 24 are connected to the computer 26 of the center 10 via a communication network, e.g., internet, and the point of an assigned consumer is sent from the computer 26 to the card reader/writers 24 when the card reader/writers 24 request the point data.

A concrete example will be explained. A communication unit 33, which is connected to the communication network and capable of sending and receiving data, is included in the computer 26. A data base 37 is formed in the HDD 34 and stores the weight of each kind of wastes, which has been measured by the identifying/measuring means 22, for each of the names identified by the name identifying means 23.

Each of the card reader/writers 24, which are installed outside of the center 10, includes a communication unit 19, which can send and receive the data via the communication network, and a control unit 21, which controls the entire card reader/writer 24.

When a consumer inserts the reward card 20 into the card reader/writer 24 installed outside of the center 10, the card reader/writer 24 reads the name of the consumer. The control unit 21 controls the communication unit 19 to send a command for inquiring the read name to the computer 26.

Upon receiving the inquiring command, the CPU 30 of the computer 26 reads the point of the corresponding consumer from the data base 37 of the HDD 34 and controls the communication unit 33 to send the read point to the card reader/writer 24.

When the control unit 21 of the card reader/writer 24 receives the point data from the computer 26, the control unit 21 controls the card reader/writer 24 to write the point in the inserted reward card 20.

Note that, after rewriting the point in the reward card 20, the control unit 21 of the card reader/writer 24 controls the communication unit 19 to send a completion message to the computer 26.

Upon receiving the completion message sent from the card reader/writer 24, the CPU 30 of the computer 26 controls the data base 37 in the HDD 34 to reset the point of the consumer, which has been rewritten in the reward card 20, to zero.

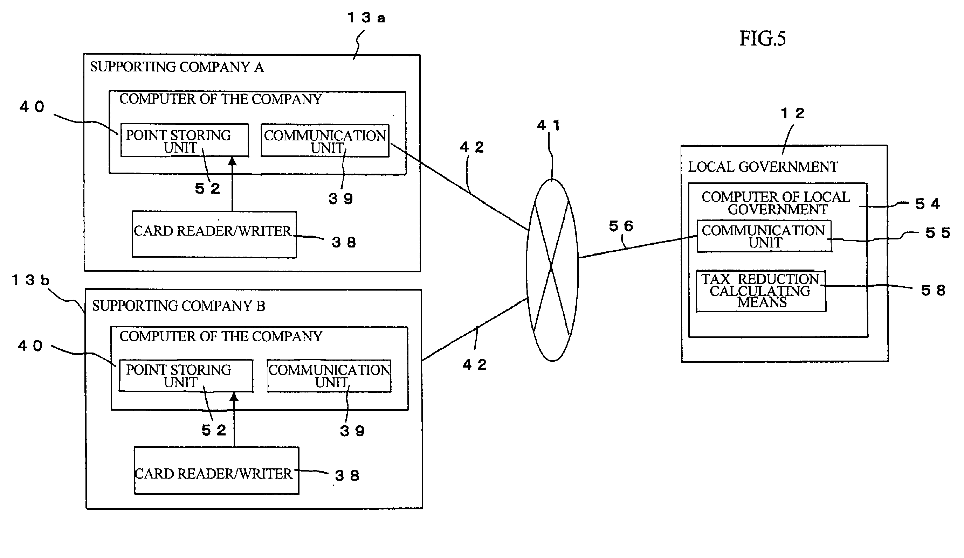

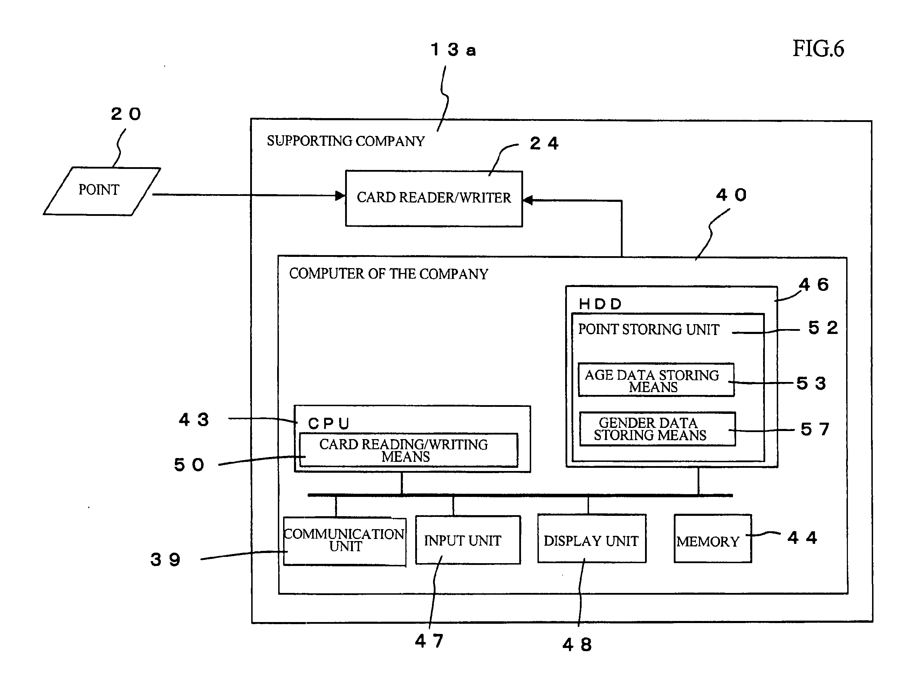

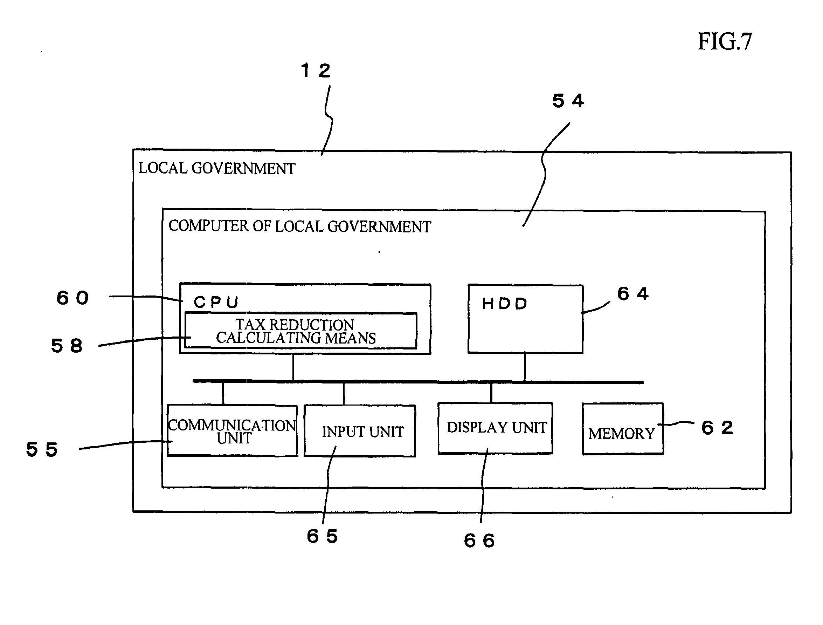

Figs. 5-7 show block diagrams of the supporting companies 13a and 13b and the local government 12.

In the drawings, only two supporting companies 13a and 13b are shown, but number of the supporting companies is not limited.

Each of the supporting companies 13a and 13b has a card reader/writer 38 and a computer 40. The card reader/writer 38 and the computer 40 are connected for data communication. The computer 40 includes a communication unit 39, which is connected to the internet via a communication line 42, so as to communicate with external equipments.

The computer 40 includes card reading/writing means 50. When a consumer pays by the reward card 20, the card reading/writing means 50 controls the card reader/writer 38 to read the present point written in the reward card 20, subtract a necessary point for the purchase from the present point and rewrite the rest point in the reward card 20.

The computer 40 further comprises: a CPU 43 for integrally controlling the entire computer 40; a memory 44 for storing data and programs; a hard disk drive unit (HDD) 46 for storing data and programs; an input unit 47, e.g., keyboard, mouse; and a display unit 48.

The card reading/writing means 50 is controlled by the CPU 43 on the basis of programs for controlling the card reader/writer 38, which have been stored in the HDD 46, etc.. Namely, the card reading/writing means 50 is realized by the CPU 43.

The computer 40 includes a point storing unit 52, which stores data of used or consumed points subtracted from the points written in the reward cards 20. For example, the HDD 46 may act as the point storing unit 52.

The point storing unit 52 need not store the used points for each consumer, but stores the used points for each category of consumers, e.g., age, gender, so as to utilize for marketing. The reward cards 20 are provided to individual consumers, so consumers' data, e.g., age, gender, can be known. Therefore, hot-selling products for each age, gender, etc. can be analyzed, and the data can be utilized to develop new products. In this case, the point storing unit 52 may have a memory area for storing consumers' data, which acts age data storing means 53, gender data storing means 57, etc..

Next, a computer 54 is installed at the office of the local government 12. The computer 54 includes a communication unit 55, which is connected to the internet 41 via a communication line 56.

The computer 54 of the local government 12 is capable of accessing to the computes 40 of the supporting companies via the internet 41. The computer 54 can read the points stored in the point storing units 52 of the computers 40.

The points read by the computer 54 are inputted to tax reduction calculating means 58 of the computer 54. The tax reduction calculating means 58 calculates tax reduction of the supporting companies 40 on the basis of the points accumulated in the companies 40.

The computer 54 of the local government 12 further includes: a CPU 60 for integrally controlling the entire computer 54; a memory 62 for storing data and programs; a hard disk drive unit (HDD) 64 for storing data and programs; an input unit 65, e.g., keyboard, mouse; and a display unit 66.

The tax reduction calculating means 58 is controlled by the CPU 60 on the basis of programs stored in the HDD 64, etc.. Namely, the tax reduction calculating means 58 is realized by the CPU 60.

As described above, in case that the supporting company does not directly deal with consumers, the card reader/writer 38 need not be installed. Points may be merely accumulated and stored in the point storing unit 52 on the basis of shipment of products.

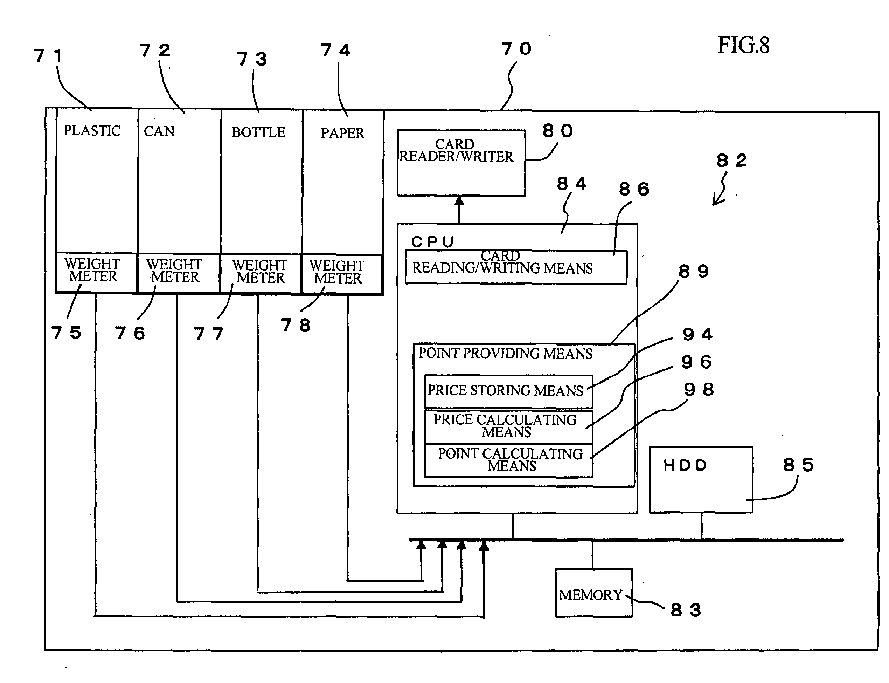

Successively, a waste box installed at a supermarket, a convenience store, etc., which are managed by the supporting companies, will be explained with reference to Fig. 8.

The waste box 70 has a plurality of opening sections for separately colleting wastes. Consumers can separately throw wastes into the waste box 70.

In the present embodiment, the waste box 70 comprises: a plastic waste storing section 71; a weight meter 75 for measuring a weight of a plastic waste put in the plastic waste storing section 71; a can storing section 72; a weight meter 76 for measuring a weight of a can put in the can storing section 72; a bottle storing section 73; a weight meter 77 for measuring a weight of a bottle put in the bottle storing section 73; a paper waste storing section 74; and a weight meter 78 for measuring a weight of a paper waste put in the paper waste storing section 74.

The weight meters 75-78 are respectively provided to bottom parts of the storing sections 71-74.

The waste box 70 has a card reader/writer 80, which writes the points in the reward cards 20 of consumers who put wastes into the waste box 70. When the reward card 20, e.g., IC card, magnetic card, is inserted into the card reader/writer 80, the card reader/writer 80 can read and rewrite the point written in the reward card 20.

The waste box 70 includes a control system 82 for controlling the card reader/writer 80 on the basis of the weight of the separated waste or wastes. The control system 82 includes: a CPU 84 for integrally controlling the entire system; a memory 83 for storing data and programs; and a hard disk drive unit (HDD) 85 for storing data and programs.

The control system 82 further includes card reading/writing means 86, which controls the card reader/writer 80 so as to write the point corresponding to the measured weight of the wastes in the card 20.

The card reading/writing means 86 is controlled by the CPU 84 on the basis of programs for controlling the card reader/writer 80, which have been stored in the HDD 85, etc.. Namely, the card reading/writing means 86 is realized by the CPU 84.

The weight meters 75-78 send weight data of the wastes in the storing sections 71-74 to the control system 82. Upon receiving the weight data, the card reading/writing means 86 controls the card reader/writer 80 to write the point corresponding to the measured weight of the waste in the reward card 20.

By installing the waste box 70 at a supermarket or a convenience store managed by the supporting company, consumers will be strongly motivated to separate wastes. On the other hand, the supporting company who issues the reward cards 20 can obtain marketing data and ensure the consumers.

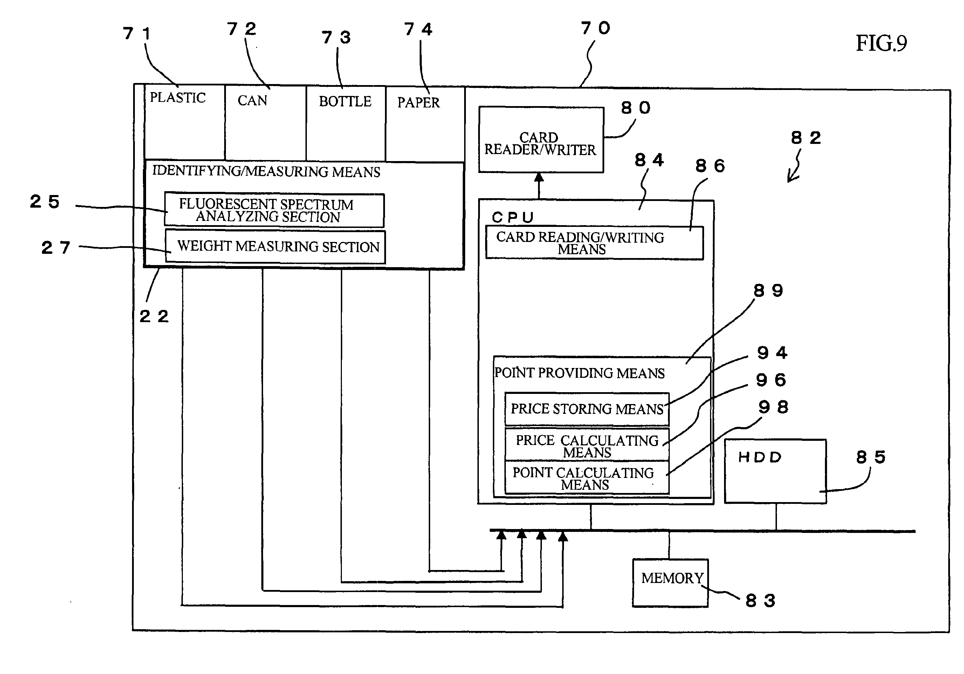

Next, another example of the waste box will be explained with reference to Fig. 9. Note that, structural elements shown in Fig. 8 are assigned the same reference symbols and explanation will be omitted.

The waste box 70 shown in Fig. 9 may have the identifying/measuring means 22 of the central disposal center 10 (see Fig. 3). Namely, the identifying/measuring means 22 identifies kinds of separated wastes and measures a weight of each kind.

For example, the identifying/measuring means 22 comprises: the fluorescent spectrum analyzing section 25 for identifying elemental components of the wastes on the basis of fluorescent spectrum and classifying the wastes into a plurality of kinds, such as metal, plastic, glass and others; and the weight measuring section 27 for measuring a weight of each kind of the wastes, which has been respectively classified by the fluorescent spectrum analyzing section 25.

The identifying/measuring means 22 sends the measured weights of the wastes to the control system 82. The control system 82 calculates the point corresponding to the measured weights and rewrites the point written in the inserted reward card 20.

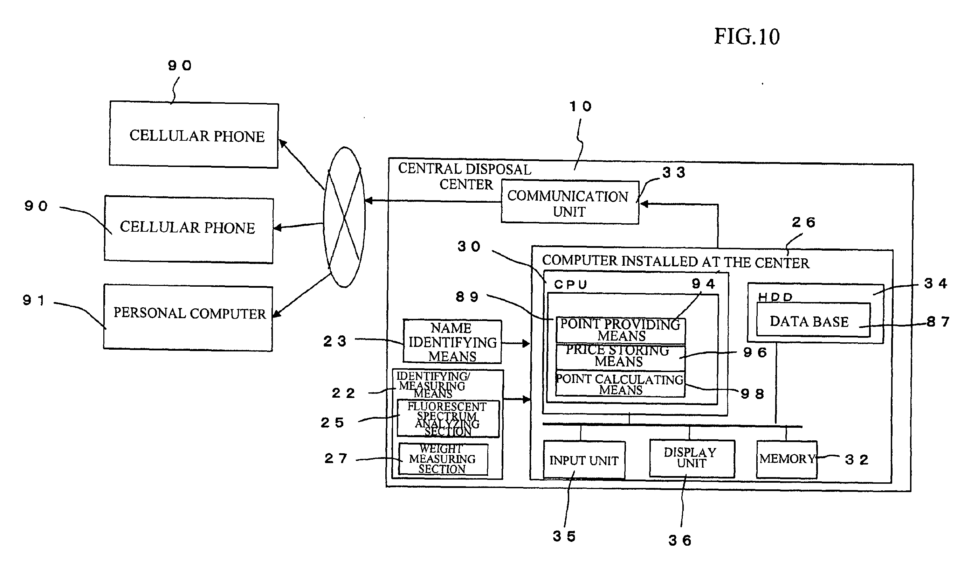

Next, another embodiment of the recycle system will be explained with reference to Fig. 10.

In this embodiment, the point is not written in the reward card. As shown in Fig. 10, the obtained point may be informed, by e-mail, to personal computers 91 or cellular phones 90 of consumers who separated wastes. Note that, structural elements explained in the above described embodiment are assigned the same reference symbols and explanation will be omitted.

In the present embodiment, the central disposal center 10 includes: the identifying/measuring means 22 for identifying kinds of wastes and measuring weights of the wastes; the name identifying means 23 for identifying names of consumers producing wastes from disposal bags; the computer 26 installed in the central disposal center 10; the point providing means 89 for providing the points on the basis of the weights of the wastes, the point providing means 89 being included in the computer 26; and the communication unit 33.

The central disposal center 10 has a data base 87, which stores consumers' names and their e-mail addresses. The data base 87 is formed in the HDD 34. Note that, the point providing means 89 is controlled by the CPU 30 of the computer 26 on the basis of point providing programs, which have been stored in the HDD 34, etc.. Namely, the point providing means 89 is realized by the CPU 30.

When the identifying/measuring means 22 measures the weight of each kind of the wastes and the name identifying means 23 identifies the name of the consumer producing the wastes, the point providing means 89 calculates the point on the basis of the weights of the separated wastes. Preferably, as described above, the point may be calculated on the basis of the weight ratio of the kinds of separated wastes.

Further, the point providing means 89 sends e-mail, in which the given point is written, to the consumer's e-mail address, which has been stored in the data base 87.

The consumer who received the e-mail may print out the e-mail and show the printed e-mail at a store of the supporting company for purchase. Further, the consumer may show a display of the cellular phone, on which the e-mail message including the point is being shown, at the store for purchase.

Note that, the computer 40 of the supporting company may have check means (not shown) for checking the actually usable point, which has been issued from the central disposal center 10, so as to prevent abuse of the point.

Further, the obtained point may be used like e-cash without being informed by e-mail. Namely, the obtained point may be converted into an electronic point and stored in a memory of a contact-free IC card or a memory unit of a cellular phone.

The invention may be embodied in other specific forms. The present embodiments are therefore to be considered in all respects as illustrative and not restrictive.

## Claims

1. A recycling system comprising:
identifying/measuring means (22) for identifying kinds of wastes and measuring amounts of the wastes; and
point providing means (89) for providing points, which can be used for purchase instead of money, on the basis of the kinds and the amounts of the wastes, which have been identified and measured by the identifying/measuring means (22).

2. The recycling system according to claim 1,
wherein the identifying/measuring means (22) comprises;
a fluorescent spectrum analyzing section (25) for identifying elemental components of the wastes on the basis of fluorescent spectrum and classifying the wastes into a plurality of kinds, such as metal, plastic, glass and others; and
a weight measuring section (27) for measuring a weight of each kind of the wastes classified by the fluorescent spectrum analyzing section (25).

3. The recycling system according to claim 1 or 2,
wherein the point providing means (89) comprises:
price storing means (94) for previously storing recycling market prices of the wastes per unit weight;
price calculating means (96) for calculating purchasing prices of the wastes on the basis of the recycling market prices of the wastes per unit weight, which have been stored in the price storing means (94), and the weights of the wastes, which have been measured by the identifying/measuring means (22); and
point calculating means (98) for calculating the points of the wastes corresponding to the purchasing prices thereof, which have been calculated by the price calculating means (96).

4. The recycling system according to one of claims 1-3,
further comprising a card reader/writer (24) for writing the points provided by the point providing means (89) in a reward card (20).
